# NEUE EUROPÄISCHE PATENTSCHRIFT

(11) **EP 2 223 727 B2**
(45) Veröffentlichungstag und Bekanntmachung des Hinweises auf die Entscheidung über den Einspruch: **24.04.2019**
(45) Hinweis auf die Patenterteilung: 20.07.2016
(21) Anmeldenummer: 10153673.8
(22) Anmeldetag: 16.02.2010
(51) Int. Cl.: B01D 46/10, B01D 46/00

(54) **Filtereinrichtung zur Filtration gasförmiger Fluide**
Filter device for filtering gaseous fluids
Dispositif de filtre destiné à la filtration de fluides gazeux

(30) Priorität: 16.02.2009 DE 202009002178 U
(43) Veröffentlichungstag der Anmeldung: 01.09.2010
(60) Teilanmeldung: 16179925.9
(73) Patentinhaber: Mann + Hummel GmbH, 71636 Ludwigsburg (DE)
(72) Erfinder: Dirnberger, Timo, 71672 Marbach am Neckar (DE); Weber, Andreas, 71691 Freiberg a. Neckar (DE)
(74) Vertreter: Horn Kleimann Waitzhofer Patentanwälte PartG mbB

(56) Entgegenhaltungen:
- DE-A1- 3 328 218
- DE-A1- 19 859 854
- DE-A1- 19 859 854
- US-A- 4 498 989

## Beschreibung

### Technisches Gebiet

Die Erfindung bezieht sich auf eine Filtereinrichtung zur Filtration gasförmiger Fluide, insbesondere auf einen Luftfilter in Kraftfahrzeugen, nach dem Oberbegriff des Anspruches 1.

### Stand der Technik

In der DE 196 38 790 A1 wird ein Ansaugluftfilter für eine Brennkraftmaschine beschrieben, bestehend aus einem als Einsatzteil ausgebildeten Filterelement in einem Filtergehäuse. Das Filtergehäuse weist einen Gehäusegrundkörper und einen öffenbaren Deckel auf, der um eine Achse schwenkbar am Gehäusegrundkörper gelagert ist. Bei abgenommenem Deckel kann das Filterelement in das Gehäuseinnere eingesetzt bzw. aus diesem entnommen werden. Das Filterelement ist von einem Rahmen eingefasst, an dem ein Dichtelement angeordnet ist, das im Gehäuseinneren in Dichtanlage mit einer Gehäuseinnenwand steht, um die Roh- von der Reinseite des Filterelements druckdicht zu separieren.

Dieser Luftfilter zeichnet sich durch einfache Austauschbarkeit des Filterelementes aus. Um einer Schallentwicklung entgegenzusteuern, die bei einem Einbau des Luftfilters im Ansaugtrakt der Brennkraftmaschine auf Grund von Motorvibrationen sowie Druckschwankungen aus dem Motor durch Vibrationen des Gehäuses und/oder des Filterelementes entstehen können, können als Verspannungsmaßnahmen zusätzliche Befestigungselemente vorgesehen sein, über die das Filterelement fest mit den Gehäuseteilen zu verbinden ist, beispielsweise über Zuganker, die das Filterelement durchragen. Nachteilig hierbei ist allerdings, dass zum Austausch des Filterelementes die Befestigungseinrichtung gelöst werden muss, was jedoch auf Grund der beengten Platzverhältnisse im Motorraum nur möglich ist, wenn das gesamte Filtergehäuse herausgenommen wird. Dies stellt jedoch einen erheblichen Montageaufwand dar. Die Schrift DE 198 59 854 A1 offenbart einen Filter mit Versteifungen an den Gehäuseschalen. Die Versteifungen bestehen aus einer Stütze. Die Gehäuseteile sind mit einer Verbindungsschraube fest verbunden. Die Stützen haben direkten Kontakt miteinander, wobei eine Zusatzdichtung das Filterelement und Roh- und Reinluftseite zur Stütze hin abdichtet. In der US 4 498 989 A ist ein Luftfilter beschrieben, der aus zwei Gehäuseteilen besteht, zwischen denen ein rundes Filterelement eingelegt ist. Zwischen Gehäuseoberteil und einem ringförmigen Rahmen zur Elementaufnahme ist eine ringförmige Dichtung aufgenommen.

Der Erfindung liegt die Aufgabe zugrunde, mit einfachen konstruktiven Maßnahmen eine Filtereinrichtung zur Filtration gasförmiger Fluide montagefreundlich auszubilden, wobei zugleich das Filterelement im montierten Zustand zur Reduzierung von Schwingungen mit dem Filtergehäuse verspannt sein soll.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die efindungsgemäße Filtereinrichtung zur Filtration gasförmiger Fluide wird insbesondere als Ansaugluftfilter im Ansaugtrakt von Brennkraftmaschinen zur Filtration der den Zylindern der Brennkraftmaschine zuzuführenden Verbrennungsluft eingesetzt. Grundsätzlich kommt aber auch eine anderweitige Verwendung für die Filtration von Gasen in Betracht, beispielsweise zur Filtration der dem Fahrzeuginnenraum zuzuführenden Luft.

Die Filtereinrichtung weist ein mehrteiliges Gehäuse sowie ein in das Gehäuse einsetzbares Filterelement auf, wobei im montierten Zustand die Gehäuseteile miteinander verbunden sind. Erfindungsgemäß ist eine das Filterelement durchsetzende Verbindungseinrichtung zur Verbindung der Gehäuseteile vorgesehen, wobei die Verbindungseinrichtung mindestens einen einteilig mit einem Gehäuseteil ausgebildeten Gehäusedom und ein Dämpfungselement umfasst, das zwischen der Stirnseite des Gehäusedoms und dem gegenüberliegenden Gehäuseteil angeordnet ist.

Diese Ausführung erlaubt ein Verspannen zwischen dem Filterelement und den Gehäuseteilen, von denen mindestens ein Gehäuseteil einen Gehäusedom aufweist, welcher einteilig mit dem Gehäuseteil ausgebildet ist und in das Filterelement einragt, bzw, durch dieses hindurchragt. Zwischen dem Gehäusedom und dem zweiten Gehäuseteil liegt das Dämpfungselement, so dass trotz eines Druckkontaktes zwischen den Gehäuseteilen Schwingungen stark gedämpft werden. Zugleich ist das Filterelement quer zur Längsachse des Gehäusedoms von diesem fixiert, so dass auch in Querrichtung die Ausbildung von Geräusch entwickelnden Schwingungen signifikant reduziert ist.

Der durch das Filterelement zumindest teilweise hindurchragende Gehäusedom liegt erfindungsgemäß lediglich auf Druckkontakt zum gegenüberliegenden Gehäuseteil, so dass eine einfach lösbare Verbindung zwischen den Gehäusetellen gegeben ist, die lediglich Druckkräfte über das zwischenliegende Dämpfungselement überträgt, jedoch keine Zugkräfte. Diese Ausführung hat den Vorteil, dass sowohl die Montage als auch die Demontage des Filterelements im Filtergehäuse mit einfachen und schnell durchzuführenden Maßnahmen und ohne Hilfswerkzeug möglich ist. Es genügt, das Filterelement in die vorgesehene Position im Gehäuseinneren einzusetzen und anschließend das Gehäuseteil einzuführen und den daran angeformten Gehäusedom durch die Ausnehmung im Filterelement hindurchzuführen, wobei Befestigungselemente zur Arretierung der Gehäuseteile aneinander im außen liegenden Bereich des Filtergehäuses vorgesehen sein können, beispielsweise manuell zu öffnende und zu schileßende Klammern. Auf diese Weise werden die Gehäuseteile auf gegenseitigen Druck belastet, so dass der durch die Ausnehmung im Filterelement hindurchragende Gehäusedom einen Druck auf das zwischenliegende Dämpfungselement und weiter auf das gegenüberliegende Gehäuseteil ausübt. Durch die hierbei erzielte Verspannung wird die Schwingungsentwicklung signifikant reduziert bzw. unterbunden.

Umgekehrt ist eine Demontage, also ein Entnehmen des Filterelementes aus dem Filtergehäuse, mit einfachen Maßnahmen möglich, da lediglich die äußeren Befestigungseinrichtungen gelöst werden müssen, damit das den Gehäusedom aufweisende Gehäuseteil aus seiner Montageposition entfernt werden kann. Da der Gehäusedom nur auf Kontakt zum Dämpfungselement liegt und/oder das Dämpfungselement auf Kontakt zum gegenüberliegenden Gehäuseteil, kann das erste, den Gehäusedom aufweisende Gehäuseteil oder das gegenüberliegende Gehäuseteil ohne Hilfsmittel entfernt werden.

Es kann zweckmäßig sein, auch an dem zweiten Gehäuseteil einen Gehäusedom anzuformen, wobei die Stirnseiten der beiden Gehäusedome einander zugewandt und koaxial zueinander ausgerichtet sind und das Dämpfungselement zwischen den Stirnseiten der Gehäusedome positioniert ist.

Gegebenenfalls ist es zweckmäßig, das Dämpfungselement mit einem der Gehäuseteile, insbesondere mit einem Gehäusedom zu verbinden, beispielsweise dergestalt, dass in die Stirnseite des Gehäusedoms eine Ausnehmung eingebracht ist, in die das Dämpfungselement einsetzbar ist. Hierdurch wird eine vorgefertigte Verbindung zwischen Gehäusedom und Dämpfungselement erreicht, was die Montage vereinfacht.

Möglich ist aber auch, das Dämpfungselement unmittelbar in die Ausnehmung in dem Filterelement einzusetzen und anschließend zur Montage den mindestens einen Gehäusedom auf Kontakt zu dem Dämpfungselement zu bringen.

Im Falle von zwei Gehäusedomen, die in Montageposition Stirnseite an Stirnseite mit zwischenliegendem Dämpfungselement angeordnet sind, ragt zumindest einer der Gehäusedome in die Ausnehmung in dem Filterelement ein, wobei der zweite Gehäusedom entweder ebenfalls teilweise in die Ausnehmung einragt oder sich nur in Nachbarschaft zur Außenseite des Filterelementes befindet.

Das Dämpfungselement ist vorzugsweise als Dämpfungsstopfen bzw. Dämpfungspfropfen ausgeführt und besteht aus einem schwingungsdämpfenden Material, beispielsweise Polyurethan (PUR). In der Ausführung als PUR-Schaum kann das Dichtmaterial in die Ausnehmung eingegossen werden. Spritzfähiges Dichtmaterial kann auch an das Filterelement angespritzt sein. Die Ausführung als Stopfen bzw. Pfropfen hat den Vorteil, dass das Dämpfungselement beispielsweise unmittelbar in die stirnseitige Ausnehmung an dem Gehäusedom eingesetzt werden kann oder in die Ausnehmung, welche in das Filterelement eingebracht ist, und durch die zumindest ein Gehäusedom wenigstens teilweise hindurchragt.

Das Filterelement weist mindestens eine Ausnehmung zur Verspannung mithilfe des Gehäusedoms auf. Es kann aber zweckmäßig sein, eine Mehrzahl von beabstandeten Ausnehmungen im Filterelement vorzusehen, in die jeweils ein oder zwei Gehäusedome einragen, um über eine größere Fläche eine Verspannung zwischen Filterelement und Gehäuseteilen zu erreichen und hierdurch die Schwingungsreduzierung zu verbessern.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Ansicht einer Filtereinrichtung zur Filtration der Ansaugluft in Brennkraftmaschinen, mit einem mehrteiligen Filtergehäuse zur Aufnahme eines Filterelementes,
Fig. 2 in perspektivischer Einzeldarstellung ein Filterelement mit einem Dämpfungspfropfen, der in eine Ausnehmung eingesetzt ist, die in das Zentrum des Filterelementes eingebracht ist,
Fig. 3 in vergrößerter Darstellung einen Schnitt durch das Filterelement, mit den beiden Gehäuseteilen des Filtergehäuses, an denen jeweils ein Gehäusedom angeformt ist, wobei einer der Gehäusedome durch die Ausnehmung in dem Filterelement hindurchragt und zwischen den Stirnseiten der koaxial angeordneten Gehäusedome ein Dämpfungselement angeordnet ist,
Fig. 4 einen weiteren Schnitt durch die Filtereinrichtung,
Fig. 5 eine weitere perspektivische Einzeldarstellung eines Filterelementes in alternativer Ausführung.

In den Figuren sind gleiche Bauteile mit gleichen Bezugszeichen versehen.

### Ausführungsformen der Erfindung

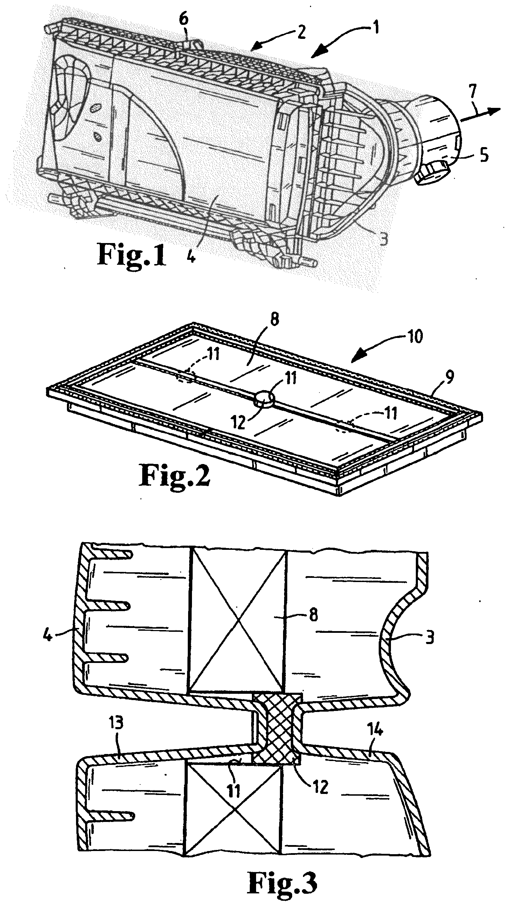

Wie Fig. 1 zu entnehmen, besteht die Filtereinrichtung 1 zur Filtration der Ansaugluft in Brennkraftmaschinen aus einem zweiteiligen Filtergehäuse 2, das sich aus einem reinluttseitigen Gehäuseteil 3 und einem rohluftseitigen Gehäuseteil 4 zusammensetzt. In dem Gehäuseinneren des Filtergehäuses 2 ist ein Element zur Filtration der herangeführten Verbrennungsluft angeordnet. Das reinluftseitige Gehäuseteil 3 ist mit einem Abströmstutzen 5 versehen, über den in Pfeilrichtung 7 die gereinigte Ansaugluft in Richtung der Zylinder der Brennkraftmaschine weitergeleitet wird. Zur lösbaren Befestigung der beiden Gehäuseteile 3 und 4 aneinander sind Befestigungselemente 6 an der Außenseite vorgesehen, die insbesondere manuell befestigt bzw. gelöst werden können.

In Fig. 2 ist ein Filterelement 8 dargestellt, welches in das Filtergehäuse gemäß Fig. 1 einzusetzen ist. Das Filterelement 8 ist rechteckförmig ausgebildet, wobei die Stirnseiten die Roh- bzw. Reinseite bilden. Das Filterelement 8 ist von einem Rahmen 9 eingefasst, welcher Träger eines umlaufenden Dichtungselementes sein kann. Das Filterelement 8 bildet gemeinsam mit dem Rahmen 9 und ggf. dem umlaufenden Dichtungselement ein austauschbares Filtereinsatzteil 10.

Auf den Rahmen 9 kann ggf. auch verzichtet werden; in dieser Ausführung wird das umlaufende Dichtungselement, das beispielsweise aus PUR-Schaum besteht, direkt an das Filterelement angegossen oder angespritzt.

Im Zentrum des Filterelementes 8 - bezogen auf die orthogonal zur Durchströmungsrichtung liegende Filterebene des Filterelements - befindet sich eine Ausnehmung 11, in die ein pfropfenförmiges Dämpfungselement 12 eingesetzt ist. Gegebenenfalls sind in das Filterelement 8 eine Mehrzahl von Ausnehmungen 11 zur Aufnahme derartiger Dämpfungselemente 12 eingebracht, wobei die Ausnehmungen sowohl symmetrisch als auch nicht-symmetrisch in das Filterelement eingebracht sein können. Die Ausnehmung 11 erstreckt sich zwischen der Roh- und der Reinseite des Filterelements. Das Dämpfungselement besteht zweckmäßigerweise aus dem gleichen Material wie das am Filterelement umlaufende Dichtelement, beispielsweise aus PUR-Schaum, und kann im gleichen Arbeitsgang wie das umlaufende Dichtelement hergestellt werden.

Wie der Schnittdarstellung gemäß Fig. 3 zu entnehmen, sind an der Innenseite jedes Gehäuseteils 3, 4 jeweils Gehäusedome 13 bzw. 14 angeformt, die einstückig mit dem jeweiligen Gehäuseteil ausgebildet sind. Ein erster Gehäusedom 13 befindet sich an der Innenseite des rohluftseitigen Gehäuseteils 4 und ragt in die Ausnehmung 11 ein, die in das Filterelement 8 eingebracht ist. Der zweite Gehäusedom 14 befindet sich an der Innenseite des reinluftseitigen Gehäuseteils 3, wobei in der Montageposition gemäß Fig. 3 die beiden konisch geformten Gehäusedome 13 und 14 koaxial zueinander ausgerichtet sind und die jeweiligen Stirnseiten der Gehäusedome einander zugewandt sind. Der zweite Gehäusedom 14 am reinluftseitigen Gehäuseteil 3 befindet sich unmittelbar im Bereich der reinluftseitigen Außenfläche des Filterelementes 8. Zwischen den Stirnseiten von Gehäusedom 13 und Gehäusedom 14 ist das Dämpfungselement 12 in die Ausnehmung 11 eingesetzt.

In der montierten Position werden über die Befestigungselemente 6 (Fig. 1) die Gehäuseteile 3 und 4 mit einer Klemmkraft aneinander gehalten, die quer zur Filterelementebene gerichtet ist. Diese Kraft wird auch über die beiden Gehäusedome 13 und 14 und das zwischenliegende Dämpfungselement 12 übertragen, wobei das Dämpfungselement 12 zumindest zu einem der unmittelbar benachbarten Gehäusedome 13, 14 nur auf losen Kontakt liegt, so dass mit dem Öffnen der äußeren Befestigungselemente die Gehäuseteile 3, 4 ohne weiteres voneinander entfernt werden können, so dass das Filterelement 8 zugänglich ist und aus dem Gehäuseinneren entfernt bzw. in das Gehäuseinnere eingesetzt werden kann.

Das Filterelement kann von dem Dämpfungselement im Zusammenspiel mit dem Gehäusedom an einem Gehäuseteil festgeklemmt sein, so dass beim Öffnen des Filtergehäuses das Filterelement mit der abzunehmenden Gehäusehälfte gelöst und insbesondere bei schwer zugänglichem Bauraum ein Elementwechsel erleichtert wird.

Das Filterelement kann aus gefaltetem Filtermaterial wie zum Beispiel Filterpapier bestehen. Es kommen aber auch andere Filtermedien bzw. Filterformen in Betracht, beispielsweise flächige Filterformen aus Vliesmaterial. Bei gefaltetem Filtermaterial sind die Gehäusedome zweckmäßigerweise so gestaltet, dass die Falten des Filterelements stabilisiert werden und somit zum Beispiel im Falle eines Wassereintrags nicht kollabieren.

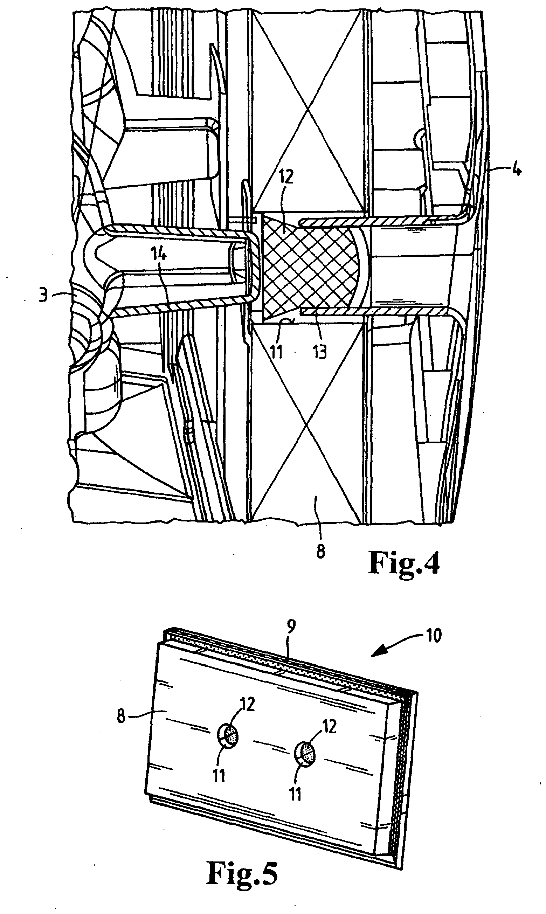

In Fig. 4 ist ein detaillierterer Schnitt durch das Filterelement 8 und die Gehäuseteile 3 und 4 dargestellt. Der rohluftseitige Gehäusedom 13 an dem rohluftseitigen Gehäuseteil 4 ragt in die Ausnehmung 11 im Filterelement 8 ein. Die Stirnseite des Doms 13 weist eine Ausnehmung auf, in die das stopfenförmige Dämpfungselement 12 eingesetzt ist. Das Dämpfungselement 12 befindet sich komplett innerhalb der Ausnehmung 11 im Filterelement 8.

Der zweite Gehäusedom 14 am reinluftseitigen Gehäuseteil 3 berührt mit seiner Stirnseite das Dämpfungselement 12. Im montierten Zustand wird das Dämpfungselement 12 von der Stirnseite des Gehäusedoms 14 in den Sitz in dem gegenüberliegenden Gehäusedom 13 gedrückt. Die Stirnseite des Gehäusedoms 14 liegt nur auf losem Kontakt mit dem Dämpfungselement 12, so dass bei der Demontage die Gehäusedome 13 und 14 voneinander entfernt werden können.

In Fig. 5 ist ein Filterelement 8 mit insgesamt zwei zueinander beabstandeten Ausnehmungen 11 dargestellt, in die jeweils ein stopfenförmiges Dämpfungselement 12 eingesetzt ist.

Der Filterkasten kann beispielsweise hochkant eingebaut werden, d.h. die Trennung zwischen Rohluftdeckel und gegenüberliegenden Gehäuseteil verläuft vertikal. Der Rohluftdeckel wird in diesem Fall nach dem Lösen der an der Oberseite zugänglichen Schrauben an einem Scharnier weggeschwenkt. Durch das am Deckel verklemmte und im Filterelement vergossene Dämpfungselement schwenkt das Filterelement mit dem Rohluftdeckel nach außen und kann in einfacher Weise entnommen werden.

## Patentansprüche

1. Filtereinrichtung zur Filtration gasförmiger Fluide, insbesondere Luftfilter in Kraftfahrzeugen, mit einem in ein mehrteiliges Gehäuse (2) einsetzbaren Filterelement (8), einem mindestens zweiteiligen Gehäuse (2) und äußeren Befestigungselementen (6), wobei diese Gehäuseteile (3, 4) im montierten Zustand miteinander verbunden sind, **dadurch gekennzeichnet, dass** eine das Filterelement (8) durchsetzende Verbindungseinrichtung für eine Verbindung zwischen den Gehäuseteilen (3, 4) vorgesehen ist, wobei die Verbindungseinrichtung mindestens einen einteilig mit einem Gehäuseteil (3, 4) ausgebildeten Gehäusedom (13, 14) und ein Dämpfungselement (12) umfasst, das zwischen der Stirnseite des Gehäusedoms (13, 14) und dem gegenüberliegenden Gehäuseteil (3, 4) angeordnet ist, wobei in der montierten Position die Gehäuseteile (3, 4) über die äußeren Befestigungselemente (6) mit einer quer zur Filterelementebene gerichteten Klemmkraft aneinander haltbar sind, wobei diese Klemmkraft über Gehäusedome (13, 14) und das zwischenliegende Dämpfungselement (12) übertragbar ist, wobei das Dämpfungselement (12) zumindest zu einem der unmittelbar benachbarten Gehäusedome (13, 14) nur auf losen Kontakt liegt, wobei mit dem Öffnen der äußeren Befestigungselemente (6) die Gehäuseteile (3, 4) ohne weiteres voneinander entfernbar sind, so dass das Filterelement (8) zugänglich ist und aus dem Gehäuseinneren entfernbar oder in das Gehäuseinnere einsetzbar ist.

2. Filtereinrichtung nach Anspruch 1, **dadurch gekennzeichnet, dass** an beiden Gehäuseteilen (3, 4) ein Gehäusedom (13, 14) angeformt ist, wobei die Stirnseiten der Gehäusedome (13, 14) einander zugewandt sind und das Dämpfungselement (12) zwischen den Stirnseiten der Gehäusedome (13, 14) angeordnet ist.

3. Filtereinrichtung nach Anspruch 1 oder 2, **dadurch gekennzeichnet, dass** in das Filterelement (8) eine Ausnehmung (11) eingebracht ist, in die ein Gehäusedom (13, 14) einragt.

4. Filtereinrichtung nach einem der Ansprüche 1 bis 3, **dadurch gekennzeichnet, dass** das Dämpfungselement (12) in die Ausnehmung (11) im Filterelement (8) eingesetzt ist.

5. Filtereinrichtung nach einem der Ansprüche 1 bis 3, **dadurch gekennzeichnet, dass** das Dämpfungselement (12) in eine stirnseitige Ausnehmung in einem Gehäusedom (13, 14) eingesetzt ist.

6. Filtereinrichtung nach einem der Ansprüche 1 bis 5, **dadurch gekennzeichnet, dass** das Dämpfungselement (12) aus Polyurethan (PUR) gefertigt ist.

7. Filtereinrichtung nach einem der Ansprüche 1 bis 6, **dadurch gekennzeichnet, dass** mindestens ein Gehäusedom (13, 14) durch die Mitte des Filterelements (8) hindurchgeführt ist, bezogen auf die orthogonal zur Durchströmungsrichtung liegende Filterebene des Filterelements.

8. Filtereinrichtung nach einem der Ansprüche 1 bis 7, **dadurch gekennzeichnet, dass** mehrere das Filterelement (8) durchsetzende Gehäusedome (13, 14) vorgesehen sind.

## Claims

1. Filtering device for filtering gaseous fluids, in particular air filter in motor vehicles, with a filter element (8) insertable into a multi-part housing (2), an at least two-part housing (2), and external fastening elements (6), wherein these housing components (3, 4) are connected with each other in assembled state, **characterized in that**
a connecting device passing through the filter element (8) is provided for a connection between the housing components (3, 4), wherein the connecting device comprises at least one housing dome (13, 14) realized in one part with a housing component (3, 4) and a damping device (12), which is disposed between the front side of the housing dome (13, 14) and the opposing housing component (3, 4), wherein in assembled position the housing components (3, 4) are held together through said external fastening elements (6) by means of a clamping force directed transversely to the filter element plane, wherein this clamping force can be transmitted via housing domes (13, 14) and the intermediate damping device (12), wherein the damping device (12) only loosely contacts at least one of the directly adjacent housing domes (13, 14), wherein the housing components (3, 4) can be easily removed from each other by opening the external fastening elements (6) so that the filter element (8) is accessible and can be removed from the housing interior or inserted into the housing interior.

2. Filtering device according to claim 1,
**characterized in that** a housing dome (13, 14) is integrally formed to both housing components (3, 4), wherein the front sides of the housing domes (13, 14) face each other and the damping device (12) is disposed between the front sides of the housing domes (13, 14).

3. Filtering device according to claim 1 or 2,
**characterized in that** a recess (11), into which projects a housing dome (13, 14), is realized in the filter element (8).

4. Filtering device according to one of the claims 1 to 3,
**characterized in that** the damping device (12) is inserted into the recess (11) in the filter element (8).

5. Filtering device according to one of the claims 1 to 3,
**characterized in that** the damping device (12) is inserted into a frontal recess in a housing dome (13, 14).

6. Filtering device according to one of the claims 1 to 5,
**characterized in that** the damping device (12) is made of polyurethane (PUR).

7. Filtering device according to one of the claims 1 to 6,
**characterized in that** at least one housing dome (13, 14) passes through the center of the filter element (8), with regard to the filter plane of the filter element lying orthogonally to the flow direction.

8. Filtering device according to one of the claims 1 to 7,
**characterized in that** several housing domes (13, 14) penetrating the filter element (8) are provided.

## Revendications

1. Dispositif de filtration de fluides gazeux, en particulier filtre à air dans des véhicules automobiles, avec un élément filtrant (8) pouvant être inséré dans un boîtier (2) multipièce et avec un boîtier (2) constitué d'au moins deux parties, éléments de fixation (6) extérieurs, ces parties du boîtier (3, 4) étant reliées les unes aux autres en position montée,
**caractérisé en ce**
**qu'**un dispositif de jonction traversant l'élément filtrant (8) est prévu pour réaliser une jonction entre les parties du boîtier (3, 4), le dispositif de jonction comprenant au moins un dôme de boîtier(13, 14) exécuté en une seule pièce avec une partie du boîtier (3, 4) et un élément d'amortissement (12) qui est placé entre la face frontale du dôme de boîtier (13, 14) et la partie du boîtier (3, 4) opposée, les parties du boîtier (3, 4) pouvant être maintenues ensemble, en position montée, à l'aide des'éléments de fixation (6) extérieurs par une force de serrage agissant transversalement au plan de l'élément filtrant, cette force de serrage pouvant être transférée par l'intermédiaire de dômes de boîtier (13, 14) et de l'élément d'amortissement (12) intermédiaire, l'élément d'amortissement (12) étant uniquement en léger contact au moins avec l'un des dômes de boîtier (13, 14) directement contigus, les parties du boîtier (3, 4) pouvant être démontées l'une de l'autre par simple ouverture des éléments de fixation (6) extérieurs de sorte que l'élément filtrant (8) devienne accessible et puisse être retiré de l'intérieur du boîtier ou être inséré à l'intérieur du boîtier.

2. Dispositif de filtration selon la revendication 1,
**caractérisé en ce qu'**un dôme de boîtier (13, 14) est formé sur les deux parties du boîtier (3, 4), les faces frontales des dômes de boîtier (13, 14) étant orientées l'une vers l'autre et l'élément d'amortissement (12) étant disposé entre les faces frontales des dômes de boîtier (13, 14).

3. Dispositif de filtration selon la revendication 1 ou 2,
**caractérisé en ce qu'**un évidement (11) dans lequel pénètre un dôme de boîtier (13, 14) est ménagé dans l'élément filtrant (8).

4. Dispositif de filtration selon l'une des revendications 1 à 3,
**caractérisé en ce que** l'élément d'amortissement (12) est inséré dans l'évidement (11) ménagé dans l'élément filtrant (8).

5. Dispositif de filtration selon l'une des revendications 1 à 3,
**caractérisé en ce que** l'élément d'amortissement (12) est inséré dans un évidement frontal ménagé dans un dôme de boîtier (13, 14).

6. Dispositif de filtration selon l'une des revendications 1 à 5,
**caractérisé en ce que** l'élément d'amortissement (12) est exécuté en polyuréthane (PUR).

7. Dispositif de filtration selon l'une des revendications 1 à 6,
**caractérisé en ce qu'**au moins un dôme de boîtier (13, 14) passe à travers le centre de l'élément filtrant (8), considéré par rapport au plan de filtration de l'élément filtrant qui est orthogonal au sens du flux.

8. Dispositif de filtration selon l'une des revendications 1 à 7,
**caractérisé en ce que** plusieurs dômes de boîtier (13, 14) traversant l'élément filtrant (8) sont prévus.
